# FASCICULE DE BREVET EUROPEEN

(11) **EP 0 445 049 B1**
(45) Date de publication et mention de la délivrance du brevet: **11.01.1995**
(21) Numéro de dépôt: 91420062.1
(22) Date de dépôt: 22.02.1991
(51) Int. Cl.: G01N 21/78, G01N 21/85, C01F 7/14

(54) **Procédé colorimétrique pour le contrôle en continu d'impuretés sur alumine hydratée**
Kolorimetrisches Verfahren zum fortlaufenden Nachweis von Unreinheiten auf Aluminiumhydroxid
Colorimetric method for continuous monitoring of impurities on aluminium hydroxide

(30) Priorité: 26.02.1990 FR 9002600
(43) Date de publication de la demande: 04.09.1991
(73) Titulaire: ALUMINIUM PECHINEY, 92400 Courbevoie (FR)
(72) Inventeur: Dablainville, Raymond, F-13120 Gardanne (FR); Dufour, Jean, F-13710 La Barque (FR)
(74) Mandataire: Mougeot, Jean-Claude

(56) Documents cités:
- DE-A- 3 601 932
- GB-A- 2 004 371
- US-A- 4 562 059
- PATENT ABSTRACTS OF JAPAN vol. 13, no. 511 (P-961)(3859) 16 Novembre 1989 ; & JP-A-1 207 649

## Description

L'invention consiste en un procédé et un dispositif de contrôle en continu de la teneur en soude caustique d'un gâteau d'alumine trihydrate, Al(OH)₃, au défilé sur une bande transporteuse placée à l'évacuation d'un filtre à tambour rotatif. Plus généralement ce procédé et ce dispositif s'appliquent au contrôle continu de la teneur, dans un produit défilant sur une bande transporteuse sous forme de mottes irrégulières, en une impureté susceptible d'une réaction colorée avec un réactif.

### POSITION DU PROBLEME

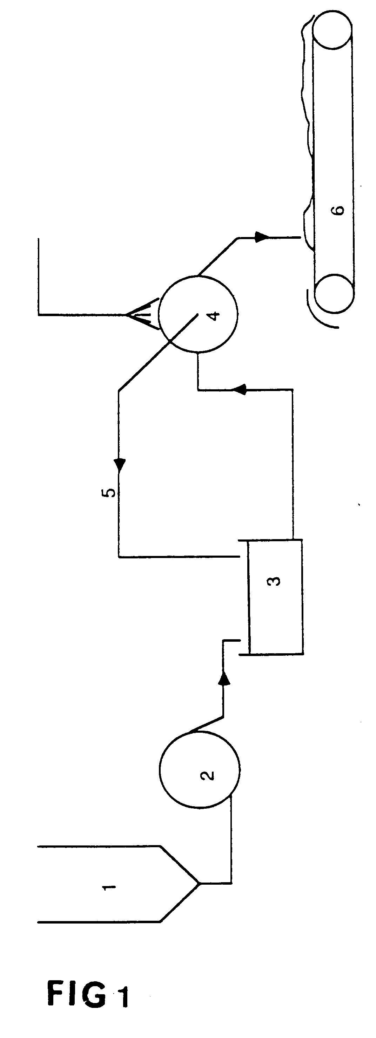

Dans le procédé Bayer de préparation d'alumine par attaque de la bauxite à la soude (figure 1), la liqueur d'aluminate obtenue, débarrassée de ses impuretés insolubles dans la soude, passe dans une série de réacteurs appelés décomposeurs (1) dans lesquels par ensemencement avec des germes d'alumine hydratée, on fait précipiter une partie de l'aluminate en solution sous forme d'alumine hydratée insoluble. Cette alumine hydratée est ensuite filtrée sur filtre rotatif (2). La gâteau obtenu contient, bien entendu beaucoup de soude dissoute, en particulier dans le liquide interstitiel du gâteau. Pour diminuer la quantité de soude, on procède en deux étapes :
- le gâteau d'alumine hydratée est remis en suspension dans un bac (3) muni d'un agitateur dans les eaux de lavage provenant d'un filtre (4) dont il sera question ci-après pour former un lait d'alumine.
- la suspension ainsi obtenue est filtrée sur un filtre à tambour sous vide (4) ; le gâteau formé est ensuite lavé sur ce même filtre à l'eau chaude. La liqueur de lavage est alors envoyée par la canalisation (5) vers le bac (3) où elle servira à la mise en suspension de l'alumine hydratée.
Le gâteau obtenu sur le filtre à tambour (4) après lavage est détaché du filtre et tombe sur une bande transporteuse (6) qui l'amène vers le four de calcination.

Pour des raisons diverses, la teneur en soude libre de l'alumine hydratée sortant du tambour (4) et se dirigeant vers la calcination doit être maintenue inférieure à une certaine limite : 300 ppm et il n'est pas indispensable de descendre en dessous de 175 ppm. Le dosage de la soude libre se fait très facilement par acidimétrie sur des échantillons prélevés de temps en temps sur la bande transporteuse (6). Mais ce dosage est assez long : l'échantillon doit être séché à l'étuve pendant 3 heures, il doit être ensuite épuisé à l'eau distillée à l'ébullition pendant 30 mn, puis titré en présence d'indicateur coloré ou à l'aide d'un pH-mètre. Or le débit d'alumine sur la bande est de plusieurs dizaines de tonnes/heure ; entre le prélèvement et le résultat du dosage un tonnage considérable d'alumine éventuellement hors-norme peut être envoyée à la calcination. Pour éviter de trop fortes dérives, on poste près de la bande transporteuse un ouvrier muni d'une pipette d'une solution de phénolphtaléine.En projetant de cette solution sur l'alumine défilant devant lui sur la bande, il est capable de s'assurer de façon, bien entendu, très grossière, et par estimation de la teinte rouge obtenue, de ce qu'il n'y a pas de dérive importante de la teneur en soude du produit.
L'invention consiste à transformer ce procédé de détection grossier et discontinu en un procédé fiable ne faisant pas appel à l'appréciation humaine et, sinon continu, du moins pratiqué automatiquement à intervalles réglables. L'entreprise était difficile pour plusieurs raisons:
Tout d'abord, le débit de produit sur la bande est très irrégulier;en effet le gâteau d'alumine se détache du tambour du filtre par plaques de volumes irréguliers et aléatoires. Il en résulte une épaisseur moyenne de produit sur la bande variant de 2 à 30 cm avec des périodes de variations d'assez grande amplitude. Cela entraîne une variation de la distance entre la surface supérieure du produit et le capteur mesurant l'intensité de la coloration.

Ensuite dans une zône où l'épaisseur moyenne est relativement constante, la surface supérieure du produit est loin d'être uniforme et parallèle à la bande transporteuse : le produit se présente sous forme de mottes de tailles et de formes variables.

Enfin, l'intensité de la coloration, que l'on se propose de mesurer pour en déduire la teneur en soude, peut varier suivant la compacité du produit qui influe sur la diffusion du colorant dans la zône de mesure.

### SOLUTION DU PROBLEME

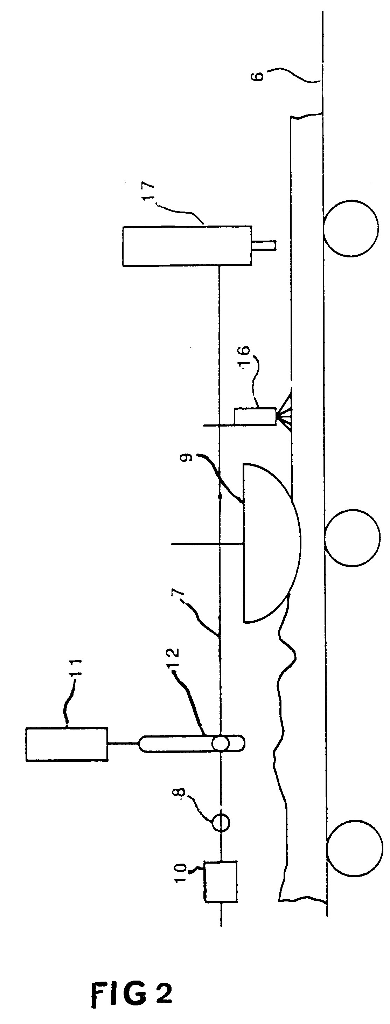

Le procédé décrit ci-après et le dispositif représenté sur la figure 2 montrent comment les problèmes ci-dessus ont été résolus.
L'invention se présente sous la forme d'une combinaison de trois moyens essentiels :
- un premier moyen est un système mécanique destiné à égaliser la surface supérieure du produit circulant sur la bande de façon à ce qu'elle offre, tout au moins dans la zône où la mesure colorimétrique sera faite, une surface sensiblement plane.
- un deuxième moyen est un système de pulvérisation destiné à projeter sur une portion de cette surface supérieure le réactif coloré, ici une solution de phénolphtaléine.
- un troisième moyen est le système de dosage colorimétrique lui-même permettant soit par une mesure absolue de l'intensité de la couleur soit par une comparaison avec une couleur de référence de doser la teneur en soude de l'alumine.
Le premier moyen se compose d'un bras de levier (7) en équilibre autour d'un axe horizontal (8) et soumis à plusieurs forces : le poids du dispositif d'égalisation (9),éventuellement celui du système de mesure de couleur (17) et le poids d'un contrepoids d'équilibrage (10). Un vérin (11) permet de descendre le bras de levier (7) pour amener le dispositif d'égalisation (9) au contact avec le produit circulant sur la bande lorsque l'on veut faire une mesure puisque, comme on le verra plus loin, la mesure n'est pas faite en continu,mais à intervalles réguliers.La fixation de la tête du vérin sur le bras de levier n'est pas rigide : elle se fait au moyen d'une lumière sensiblement verticale (12) permettant au levier (7) d'osciller de façon à ce que le dispositif d'égalisation (9) puisse suivre les variations d'épaisseur de l'alumine sur la bande.

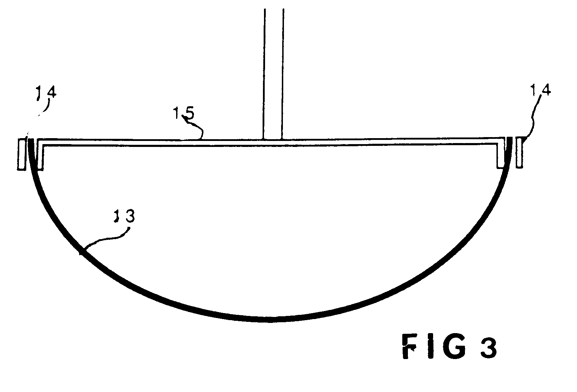

Le dispositif d'égalisation (9) est représenté sur la figure 3 ; il est constitué d'un demi-cylindre en matière plastique (13) maintenu, à chacune des génératrices qui le limitent par deux barrettes (14) fixées sur un cadre (15). Ce demi-cylindre doit répondre à des caractéristiques précises :
- il doit être suffisamment rigide pour écraser les mottes en surface et donner une surface supérieure sensiblement plane.
- il doit être suffisamment souple et déformable pour laisser cependant passer les mottes qu'il n'aurait pas réussi à déliter.
La demanderesse a trouvé qu'une feuille de matière plastique de type tétrafluoropolyéthylène d'une épaisseur de quelques millimètres convenait parfaitement à cet usage.
Le système d'égalisation (9) oscille autour de son axe (8) de façon à épouser les variations d'épaisseur du lit d'alumine, la force d'appui, donc la profondeur d'écrasement du lit d'alumine étant réglée par le déplacement du contrepoids (10).
La longueur de ce demi-cylindre (13) n'a évidemment pas besoin d'être égale à la largeur de la bande transporteuse:il suffit qu'elle soit légèrement supérieure au diamètre de la tache de colorant créée par le système de pulvérisation.

Le deuxième moyen est constitué d'un système classique de pulvérisation de liquides,par air comprimé ou par tout autre moyen (16). Ce moyen est disposé entre le système d'égalisation (9) et l'appareil de mesure colorimétrique, comme représenté sur la figure.

Le troisième moyen représenté schématiquement en (17) sur la figure 2 peut consister ou bien en un appareil de mesure en continu de la couleur ou bien en une caméra video couleur. Chaque système possède ses avantages spécifiques :
- l'appareil de mesure de couleur permet des mesures absolues ; en d'autres termes, il ne nécessite pas un étalonnage par mesure du blanc à chaque opération de mesure. En revanche,il doit travailler à distance pratiquement constante de la face supérieure du lit d'alumine ; il est donc avantageux de le fixer sur le bras de levier qui supporte le système d'égalisation, ce qui assure par construction une distance constante. Son prix d'achat est, en outre, plus élevé que celui d'une caméra.
- la caméra video couleur a, elle, une profondeur de champ suffisante pour que l'on ne soit pas obligé de lui faire suivre les variations à grande période de l'épaisseur du lit. Il est ,en revanche, nécessaire de procéder, à chaque fois, à une mesure comparative entre le blanc (sans addition de réactif coloré) et la couleur. Chacun de ces appareils est, bien entendu, muni d'un dispositif électronique de traitement du signal permettant soit l'affichage de la teneur en soude,soit la régulation de cette teneur par action sur le débit d'eau de lavage sur le filtre.

### EXEMPLE

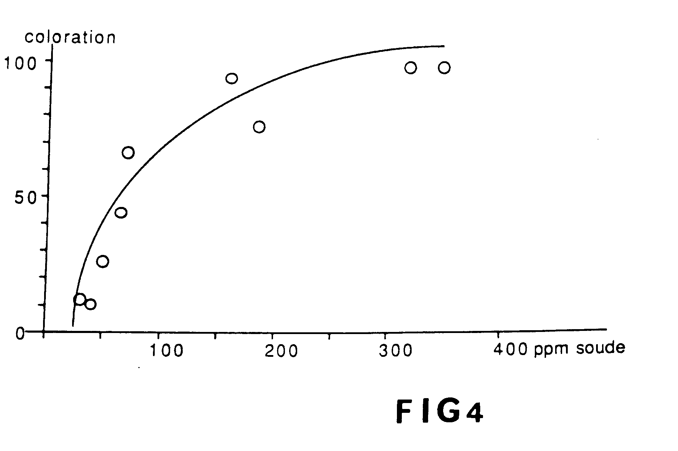

Sur la bande transporteuse (6) de la figure 1 on a installé le système de mesure représenté sur la figure 2. Le débit d'alumine hydratée sur la bande était environ de 30 tonnes/heure.
Le système continu de mesure de la couleur utilisé,un appareil de marque QUAL-PROBE fabriqué par la société Hunterlab, était fixé sur le bras de levier (7) ainsi que représenté sur la figure 2.
Un automate programmable, non représenté sur les figures, déclenchait, toutes les trois minutes les opérations suivantes :
- Mise en contact par action du vérin (11) du dispositif d'égalisation (9) avec la partie supérieure du lit d'alumine.
- Pulvérisation pendant 4 secondes d'une solution alcoolique de phénolphtaléine à 0,2 % en poids. On obtient une tache rose d'environ 6 cm de diamètre.
- Mesure de la couleur avec un réglage de la surface inspectée de 30 mm de diamètre.
Simultanément, on a prélevé des échantillons d'alumine hydratée à intervalles réguliers en prenant bien soin de noter la correspondance entre ces échantillons et la mesure de couleur.
Dans ces échantillons, la soude soluble a été dosée par acidimétrie avec l'acide rosolique comme indicateur. La figure 4 représente la réponse de l'appareil de mesure, exprimée en unités arbitraires, en fonction de la quantité de soude soluble dosée par acidimétrie dans les échantillons, exprimée en parties par million d'alumine hydratée sèche.
On note une bonne corrélation entre ces deux séries de valeurs, la dispersion résiduelle n'ayant aucune conséquence fâcheuse quant au pilotage du procédé industriel.

Il est clair que ce procédé et ce dispositif que nous avons décrits plus particulièrement pour le contrôle en continu de la teneur en soude de l'alumine hydratée peut s'appliquer dans son principe revendiqué au contrôle des impuretés contenues dans un produit défilant en vrac avec une surface supérieure irrégulière, sous réserve que ces impuretés soient susceptibles de donner avec un réactif adéquat, une réaction colorée.

## Revendications

1. Procédé de dosage automatique et programmé du taux d'un produit défilant en vrac avec une surface supérieure irrégulière sur une bande transporteuse, en une impureté formant avec un réactif approprié un composé coloré comportant les étapes suivantes:
- on égalise sur au moins une partie de la largeur de la bande la surface supérieure du produit
- on pulvérise sur une partie de la portion égalisée le réactif approprié
- on mesure l'intensité de la couleur obtenue
- on en déduit par référence à une courbe d'étalonnage le taux en impureté du produit.

2. Procédé selon la revendication 1 caractérisé en ce que les quatre étapes du procédé sont répétées à intervalles de temps réguliers et ajustables à l'aide d'un automate programmé.

3. Procédé selon l'une des revendications 1 ou 2, caractérisé en ce qu'il est appliqué au dosage de la soude dans l'alumine hydratée et que le réactif coloré est la phénolphtaléine.

4. Appareil de dosage automatique et programmé du taux d'un produit défilant en vrac avec une surface supérieure irrégulière sur une bande transporteuse, en une impureté formant avec un réactif approprié un composé coloré comprenant:
- un système d'égalisation composé lui-même de:
a) un bras de levier (7) en équilibre autour d'un axe horizontal (8) sous l'action de plusieurs forces:le poids du dispositif d'égalisation (9),éventuellement celui du système de mesure de couleur (17) et celui d'un contrepoids (10).
b) un dispositif d'égalisation (9) constitué d'un demi-cylindre en feuille de matière plastique (13) dont la partie inférieure convexe est en contact avec le lit de produit défilant sur la bande,fixé par les deux génératrices qui le limitent sur un cadre solidaire (15) du bras de levier (7).
c) un vérin (11) permettant de descendre le bras de levier (7) pour amener la partie inférieure du cylindre en matière plastique au contact avec le produit défilant sur la bande,la tête du vérin (11) étant fixée sur le bras de levier (7) de façon non rigide pour permettre les oscillations du bras de levier (7) lorsque le dispositif d'égalisation (9) suit les variations d'épaisseur du produit défilant sur la bande.
- un système de pulvérisation du liquide (16) contenant le réactif formant avec l'impureté le composé coloré
- un système de mesure (17) de la coloration obtenue.

5. Appareil selon la revendication 4 caractérisé en ce que le système de mesure (17) de la coloration est constitué d'un appareil de mesure (17) de la couleur fixé sur le bras de levier (7).

6. Appareil selon la revendication 4 caractérisé en ce que le système de mesure de la couleur est constitué d'une caméra video couleur (17).

## Claims

1. A method of automatic, programmed determination of the quantity of an impurity contained in a product travelling in bulk, with an uneven upper surface, on a conveyor belt, the impurity forming a coloured compound with an appropriate reagent, comprising the following stages:
- levelling the top surface of the product over at least part of the width of the belt
- spraying the appropriate reagent onto part of the levelled portion
- measuring the intensity of the colour obtained
- deducing the quantity of impurity contained in the product therefrom by reference to a gradation curve.

2. A method according to Claim 1, characterised in that the four stages of the method are repeated at regular intervals of time, which can be adjusted by means of a programmed automaton.

3. A method according to Claim 1 or 2, characterised in that it is applied to determining the soda in aluminium hydroxide, and that the coloured reagent is phenolphthalein.

4. An apparatus for automatic, programmed determination of the quantity of an impurity contained in a product travelling in bulk, with an uneven upper surface, on a conveyor belt, the impurity forming a coloured compound with an appropriate reagent, comprising:
- a levelling system itself made up of:
a) a lever arm (7) in equilibrium about a horizontal shaft (8) by the action of several forces: the weight of the levelling arrangement (9), possibly that of the colour measuring system (17) and that of a counterweight (10).
b) a levelling arrangement (9) comprising a half cylinder made of a plastics sheet (13) with the lower, convex part in contact with the bed of product travelling on the belt, the half cylinder being fixed by its two boundary generatrices onto a frame (15) rigidly connected to the lever arm (7).
c) a jack (11) enabling the lever arm (7) to be lowered to bring the lowest part of the plastics cylinder into contact with the product travelling on the belt, the head of the jack (11) being fixed non-rigidly to the lever arm (7), so as to enable the lever arm (7) to oscillate when the levelling arrangement (9) follows the variations in the thickness of the product travelling on the belt.
- a system for spraying the liquid (16) containing the reagent which forms the coloured compound with the impurity.
- a system for measuring (17) the colour obtained.

5. An apparatus according to Claim 4, characterised in that the colour measuring system comprises a colour measuring instrument (17) fixed on the lever arm (7).

6. The apparatus of Claim 4, characterised in that the colour measuring system is a colour video camera (17).

## Patentansprüche

1. Verfahren zur programmierten automatischen Messung des Gehalte eines als Schüttgut mit unregelmäßiger Oberseite auf einem Förderband durchlaufenden Materials an einer Verunreinigung, die mit einem geeigneten Reagens eine farbige Verbindung bildet, mit folgenden Schritten:
- Glätten der Oberseite des Materials auf wenigstens einem Teil der Breite des Bandes,
- Feinverteilen des geeigneten Reagens auf wenigstens einen Teil des geglätteten Bereichs,
- Messen der Intensität der erhaltenen Färbung,
- daraus durch Vergleich mit einer Eichkurve den Gehalt des Materials an der Verunreinigung Ableiten.

2. Verfahren nach Anspruch 1,
dadurch gekennzeichnet, daß
die vier Schritte des Verfahrens in regelmäßigen, einstellbaren Zeitabständen mit Hilfe eines programmierten Automaten wiederholt werden.

3. Verfahren nach einem der Ansprüche 1 oder 2,
dadurch gekennzeichnet, daß
es für die Messung des Natriumhydroxidgehalts von Aluminiumhydroxid eingesetzt wird und das Farbreagens Phenolphthalein ist.

4. Vorrichtung zur automatischen, programmierten Bestimmung des Gehalts eines als Schüttgut mit ungleichmäßiger Oberseite auf einem Förderband durchlaufenden Materials an einer Verunreinigung, die mit einem geeigneten Reagens eine farbige Verbindung bildet, mit:
- einem Glättsystem, das aufgebaut ist aus
a) einem Hebelarm (7), der um eine horizontale Achse (8) unter Einwirkung mehrerer Kräfte, nämlich der Gewichtskraft der Glättvorrichtung (9), eventuell der des Farbmeßsystems (17) und der eines Gegengewichts (10) im Gleichgewicht ist,
b) einer Glättvorrichtung (9), die aus einem Halbzylinder aus einer Kunststoffplatte (13) gebildet ist, deren konvexer unterer Bereich in Kontakt mit der auf dem Band durchlaufenden Schicht des Materials ist, und die an ihren beiden durch Umhüllende vorgegebenen Kanten an einem mit dem Hebelarm (7) verbundenen Rahmen (15) befestigt ist,
c) einem Zylinder (11), mit dem der Hebelarm (7) abwärtsbewegt werden kann, um den unteren Bereich des Zylinders aus Kunststoff in Kontakt mit dem auf dem Band durchlaufenden Material zu bringen, wobei der Zylinderkopf (11) am Hebelarm (7) in nicht starrer Weise befestigt ist, um Schwingungen des Hebelarms (7) zu ermöglichen, wenn die Glättvorrichtung (9) Dickenänderungen des auf dem Band durchlaufenden Materials folgt;
- einem System zum Verteilen der Flüssigkeit (16), die das Reagens enthält, das mit der Verunreinigung die farbige Verbindung bildet;
- einem Meßsystem (17) zur Messung der erhaltenen Färbung.

5. Vorrichtung nach Anspruch 4,
dadurch gekennzeichnet, daß
das Meßsystem (17) zur Messung der Färbung aus einem am Hebelarm (7) befestigten Farbmeßgerät (17) besteht.

6. Vorrichtung nach Anspruch 4,
dadurch gekennzeichnet, daß
das Farbmeßsystem aus einer Farbvideokamera (17) besteht.
